(19) Europäisches Patentamt
European Patent Office
Office européen des brevets

(11) EP 4 651 481 A1

(12) EUROPEAN PATENT APPLICATION

(43) Date of publication:
19.11.2025 Bulletin 2025/47

(21) Application number: 24305742.9

(22) Date of filing: 14.05.2024

(51) International Patent Classification (IPC):
H04N 19/117 (2014.01)     H04N 19/147 (2014.01)
H04N 19/172 (2014.01)

(52) Cooperative Patent Classification (CPC):
H04N 19/147; H04N 19/117; H04N 19/172

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• DAMODARAN, Bharath Bhushan
  56000 VANNES (FR)
• BALCILAR, Muhammet
  35830 BETTON (FR)
• LAMBERT, Anne
  35250 SAINT-AUBIN-D'AUBIGNE (FR)

(74) Representative: Vossius & Partner
Patentanwälte Rechtsanwälte mbB
Siebertstraße 3
81675 München (DE)

(54) **SHIFTING THE PARAMETERS OF A NEURAL NETWORK BASED COMPRESSION IN DECODING TIME**

(57)     Apparatuses and methods are disclosed including techniques for encoding and decoding video data. Techniques disclosed include training a neural network to predict, based on image coordinates, an image region of the video data, where the training determines network parameters. A step size is determined, used during decoding time to shift parameters of the network parameters. The determined step size and network parameters are then coded into a bitstream. Techniques disclosed further include decoding, from the bitstream, the step size and the network parameters. Then, shifting, based on the step size, parameters of the network parameters. The image region is reconstructed by evaluating the neural network using the shifted parameters.

ENCODING VIDEO DATA:

TRAIN A NEURAL NETWORK TO PREDICT, BASED ON IMAGE COORDINATES, AN IMAGE REGION OF VIDEO DATA, WHEREIN THE TRAINING DETERMINES NETWORK PARAMETERS
510

DETERMINE A STEP SIZE, USED TO SHIFT PARAMETERS OF THE NETWORK PARAMETERS
520

CODE, INTO A BITSTREAM, THE STEP SIZE AND THE NETWORK PARAMETERS
530

500

FIG. 5

**Description**

BACKGROUND

An implicit neural representation (INR) network is a neural network that is trained to represent (encode) a given image. The network parameters are determined in a training phase where a cost function, including a distortion metric and a rate function, is minimized to obtain optimal network parameters. Then, in an inference phase, to reconstruct (decode) the image, the neural network is evaluated based on the optimal network parameters. Typically, the minimization of the cost function involves a multi-objective optimization process, so-called Pareto optimization. In such optimization, minimizing one term (e.g., representing distortion) cannot be achieved without degrading the other term (e.g., representing bitrate). Consequently, increasing the image reconstruction quality (that is, reducing the distortion) comes at the price of increasing the bitrate spent in coding the network parameters, which is a limiting outcome when the neural network is applied to compression.

SUMMARY

Aspects disclosed in the present disclosure describe methods for encoding video data. The methods include training a neural network to predict, based on image coordinates, an image region of the video data, where the training determines network parameters. The methods further include determining a step size used to shift parameters of the network parameters. The determined step size and network parameters are then coded into a bitstream. Aspects disclosed in the present disclosure also describe methods for decoding the video data. The methods include decoding, from the bitstream, the step size and the network parameters. Then, shifting, based on the step size, parameters of the network parameters. The methods further include reconstructing the image region by evaluating the neural network using the shifted parameters.

Aspects disclosed in the present disclosure describe apparatuses for encoding video data. The apparatuses comprise at least one processor and memory storing instructions. The instructions, when executed by the at least one processor, can cause the apparatuses to train a neural network to predict, based on image coordinates, an image region of the video data, where the training determines network parameters. The instructions further cause the apparatuses to determine a step size used to shift parameters of the network parameters. The determined step size and network parameters are then coded into a bitstream. Aspects disclosed in the present disclosure also describe apparatuses for decoding video data. The apparatuses comprise at least one processor and memory storing instructions. The instructions, when executed by the at least one processor, can cause the apparatuses to decode, from the bitstream, the step size and the network parameters. Then, shifting, based on the step size, parameters of the network parameters. The instructions further cause the apparatuses to reconstruct the image region by evaluating the neural network using the shifted parameters.

Further aspects disclosed in the present disclosure describe a non-transitory computer-readable medium comprising instructions executable by at least one processor to perform methods for encoding video data. The methods include training a neural network to predict, based on image coordinates, an image region of the video data, where the training determines network parameters. The methods further include determining a step size used to shift parameters of the network parameters. The determined step size and network parameters are then coded into a bitstream. Aspects disclosed in the present disclosure also describe a non-transitory computer-readable medium comprising instructions executable by at least one processor to perform methods for decoding video data. The methods include decoding, from the bitstream, the step size and the network parameters. Then, shifting, based on the step size, parameters of the network parameters. The methods further include reconstructing the image region by evaluating the neural network using the shifted parameters.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF DESCRIPTION OF THE DRAWINGS

FIG. 1 is a block diagram of an example system, according to which aspects of the present embodiments can be implemented.

FIG. 2 is a diagram illustrating an example INR network, according to which aspects of the present embodiments can be implemented.

FIG. 3 is a block diagram of an example video encoder, according to which aspects of the present embodiments can be implemented.

FIG. 4 is a block diagram of an example video decoder, according to which aspects of the present embodiments can be implemented.

FIG. 5 is a flowchart of an example method for encoding video data, according to which aspects of the present embodiments can be implemented.

FIG. 6 is a flowchart of an example method for decoding video data, according to which aspects of the present embodiments can be implemented.

DETAILED DESCRIPTION

Representing data via INR networks is a relatively new technology that has only recently been investigated by the computer vision and computer graphics communities. INR networks are studied for compression where an efficient representation of image data (at various dimensions, including videos, surfaces, and volumes) is required. Neural networks, namely, autoencoders, have already been used to encode images; however, these networks are generically trained and thus their complexity increases with an increase in the number and dimensions of the images used for their training. In contrast, an INR network is trained to represent a specific image. Hence, unlike autoencoders, an NN-based encoder is not generic but is adapted (overfitted) to the image to be encoded and is, therefore, more efficient. Moreover, since the INR network is trained to predict an image based on the image's coordinates, the trained network can be applied to progressively reconstruct the image based on any set of coordinates (e.g., a subset of the coordinates used in the training, or any other set of extrapolated or interpolated coordinates therefrom). Aspects described herein improve the reconstruction quality of INR-based compression.

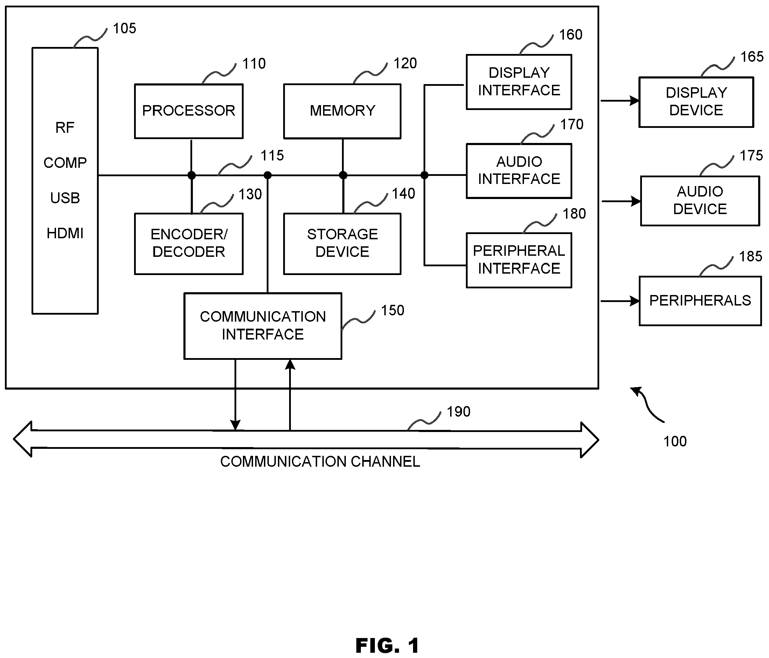

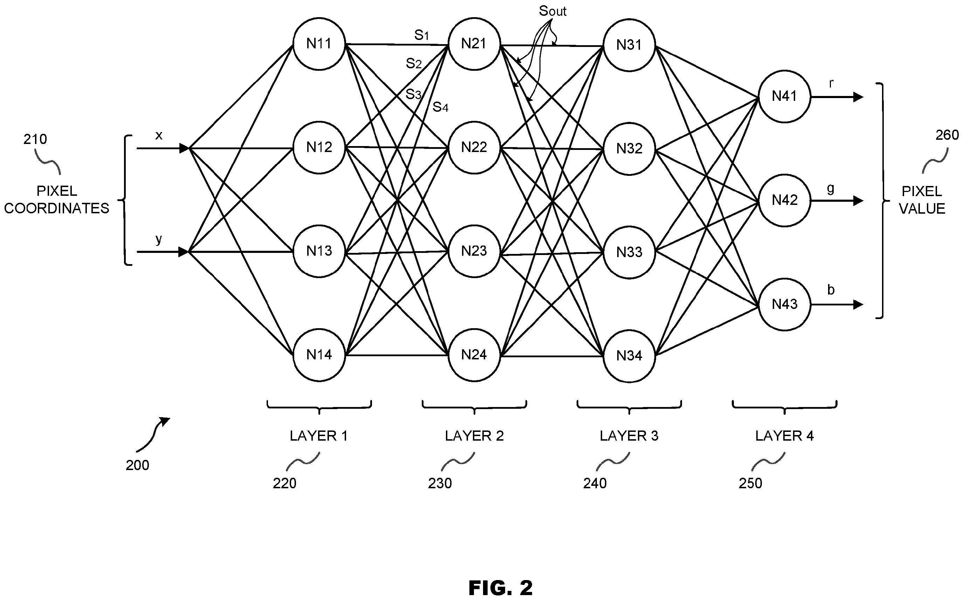

Apparatuses and methods are presented herein for encoding and decoding video data. A system for processing and displaying content, with which various aspects and examples described herein may be implemented, is generally described in reference to FIG. 1, followed by a description of the aspects of the present disclosure in reference to FIGS. 2-6.

FIG. 1 illustrates a block diagram of an example system 100. System 100 can be embodied as a device and can be configured to perform one or more of the aspects described in this application. Examples of such devices, include, but are not limited to, various electronic devices such as personal computers, laptop computers, smartphones, tablet computers, digital multimedia set-top boxes, digital television receivers, personal video recording systems, connected home appliances, and servers. Elements of system 100, singly or in combination, can be embodied in an integrated circuit, multiple integrated circuits, and/or discrete components. For example, in at least one embodiment, the processing 110 and encoder/decoder 130 elements of system 100 are distributed across multiple integrated circuits and/or discrete components. In various embodiments, the system 100 is communicatively coupled to other systems, or to other electronic devices, via, for example, a communications bus or through dedicated input and/or output ports.

The system 100 includes at least one processor 110 that can be configured to execute instructions loaded therein for implementing, for example, the various aspects described in this application. Processor 110 can include embedded memory, input and output interfaces, and various other circuitries as known in the art. The system 100 includes at least one memory 120, such as a volatile memory device and/or a non-volatile memory device. System 100 includes a storage device 140, which can include non-volatile memory and/or volatile memory, such as EEPROM, ROM, PROM, RAM, DRAM, SRAM, flash, magnetic disk drives, and/or optical disk drives. The storage device 140 can be an internal storage device, an attached storage device, and/or a network accessible storage device, for example.

System 100 includes an encoder/decoder module 130 configured to process data to provide encoded video data or decoded video data. The encoder/decoder module 130 can include its own processor and memory. The encoder/decoder module 130 can be implemented as a separate element of system 100 or can be incorporated within processor 110 as a combination of hardware and/or software as known to those skilled in the art. Additionally, the encoder/decoder module 130 represents module(s) that can be implemented in a separate device to perform encoding and/or decoding functions.

Program code that is to be loaded into processor 110 or into encoder/decoder 130 to perform the various aspects described in this application can be stored in a storage device 140 and subsequently loaded into memory 120 for execution by processor 110. In accordance with various embodiments, one or more of processor 110, memory 120, storage device 140, and encoder/decoder module 130 can store one or more of various items during the performance of the processes described in this application. Such stored items can include, but are not limited to, the input video, the decoded video or portions of the decoded video, the bitstream, matrices, variables, operational logic, and intermediate or final results from the processing of equations, formulas, operations.

In several embodiments, memory inside of the processor 110 and/or the encoder/decoder module 130 is used to store instructions and to provide working memory for processing functions that are needed during encoding or decoding. In other embodiments, however, memory external to the processing device (where, for example, the processing device can be either the processor 110 or the encoder/decoder module 130) can be used for one or more of these functions. The external memory can be the memory 120 and/or the storage device 140 that may comprise, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations.

The input to the elements of system 100 can be provided through various input devices as indicated in block 105. Such input devices include, but are not limited to, (i) an RF portion that receives an RF signal transmitted, for example, over the air by a broadcaster, (ii) a Composite input terminal (COMP), (iii) a USB input terminal, and/or (iv) an HDMI input terminal.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select, for example, a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements that perform these functions, for example, frequency selectors, signal selectors, band-limiters, channel selectors, filters, downconverters, demodulators, error correctors, and demultiplexers. The RF portion can include a tuner that performs some of these functions, including, for example, down-converting the received signal to a lower frequency (for example, an intermediate frequency or a near-baseband frequency) or to a baseband. In one set-top box embodiment, the RF portion and its associated input processing element receive an RF signal transmitted over a wired (for example, cable) medium, and perform frequency selection by filtering, down-converting, and filtering again to a desired frequency band. Various embodiments rearrange the order of the above-described (and other) elements, remove some of these elements, and/or add other elements performing similar or different functions. Added elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing integrated circuit or within processor 110 as necessary. Similarly, aspects of USB or HDMI interface processing can be implemented within separate interface integrated circuits or within processor 110 as necessary. The demodulated, error corrected, and demultiplexed stream is provided to various processing elements, including, for example, processor 110, and encoder/decoder 130 operating in combination with the memory and storage elements to process the data stream as necessary for presentation on an output device.

Various elements of system 100 can be provided within an integrated housing. Within the integrated housing, the various elements can be interconnected and transmit data therebetween using a suitable connection arrangement 115, for example, an internal bus as known in the art, including the I2C bus, wiring, and printed circuit boards.

The system 100 includes communication interface 150 that enables communication with other devices via communication channel 190. The communication interface 150 can include, but is not limited to, a transceiver configured to transmit and to receive data over communication channel 190. The communication interface 150 can include, but is not limited to, a modem or network card. The communication channel 190 can be implemented, for example, within a wired and/or a wireless medium.

Data can be streamed to the system 100, in various embodiments, using a Wi-Fi network such as IEEE 802.11. The Wi-Fi signal of these embodiments is received over the communication channel 190 and the communication interface 150 which can be adapted for Wi-Fi communications. The communication channel 190 of these embodiments is typically connected to an access point or router that provides access to outside networks including the Internet for allowing streaming applications and other over-the-top communications. In other embodiments, data can be streamed to the system 100 using a set-top box that delivers the data over the HDMI connection of the input block 105 or data can be streamed to the system 100 using the RF connection of the input block 105.

The system 100 can provide an output signal to various output devices, including a display device 165, an audio device (e.g., speaker(s)) 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display device 165, the audio device 175, or the other peripheral devices 185 using signaling such as AV.link, CEC, or other communication protocols that enable device-to-device control with or without user intervention. The output devices can be communicatively coupled to system 100 via dedicated connections through respective interfaces 160, 170, and 180. Alternatively, the output devices can be connected to system 100 using the communication channel 190 via the communication interface 150. The display device 165 and the audio device 175 can be integrated in a single unit with the other components of system 100 in an electronic device, for example, a television. In various embodiments, the display interface 160 includes a display driver, for example, a timing controller (T Con) chip.

Alternatively, the display device 165 and the audio device 175 can be separate from one or more of the other components, for example, if the RF portion of input 105 is part of a separate set-top box. In various embodiments in which the display device 165 and the audio device 175 are external components, the output signal can be provided via dedicated output connections, including, for example, HDMI ports, USB ports, or COMP outputs.

The operation of an INR network, generally referred to herein as a neural network, is demonstrated in FIG. 2. For clarity of the presentation, in FIG. 2, pixels of a two dimensional image are predicted by a neural network based on their respective 2D image coordinates. However, the same principles can be applied for predicting data of any dimensionality. For example, voxels of a 3D image can be predicted based on their respective 3D image coordinates, or pixels of one or more video frames can be predicted based on their respective frame index in addition to the 2D image (frame) coordinates.

FIG. 2 is a diagram illustrating an example INR network 200. An INR network is a neural network composed of multiple layers; each layer includes multiple nodes (denoted by circles). Generally, the architecture of a neural network is characterized by the number of layers, the number of nodes in each layer, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values ($x$, $y$) 210 and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a component of a pixel value 260, respectively, $r$, $g$, and $b$ (or components of any other color model, such as $y$, $u$, and $v$).

Each node in the network 200 represents an operator that generates an output signal based on the node's inputs. For example, node N21 of the second layer 230 receives as an input the output signals of nodes N11, N12, N13, and N14, respectively, $s_1$, $s_2$, $s_3$, and $s_4$. These inputs are translated into an output signal $s_{out}$ that feeds the nodes of the third layer 240. A node's operator can be expressed as follows:

$$s_{out} = A(p_0 + \sum_{i=1}^{L} p_i \cdot s_i), \qquad (1)$$

where, $L$ denotes the number of input signals (i.e., the number of nodes from the previous layer that connect to the node), $s = \{s_i : i = 1\ to\ L\}$ denotes the node's input signal vector, $s_{out}$ denotes the node's output signal, $p = [p_i : i = 0\ to\ L]$ denotes the node's parameters, and $A$ denotes an activation function (e.g., ReLU, Sigmoid, or Tanh). Hence, network parameters can be grouped into weight parameters $p_1$-$p_L$, bias parameters $p_0$, and activation function parameters (if such parameters exist) that are pulled from all nodes of the network 200, collectively referred to as the parameters $\theta$ of the network 200. These network parameters $\theta$ can be determined through a training process. The network operation, denoted by $f_\theta$, is therefore defined by the network parameters $\theta$.

Hence, an INR network 200 can be trained to predict a pixel value 260 of an image based on the coordinates 210 of the pixel - that is, $f_\theta(x,y) = (r, g, b)$ (or $f_\theta(x,y) = (y, u, v)$). During a training phase of an INR network 200, the parameters $\theta$ (or a subset of them) are determined. This is done via an optimization process through which the parameters $\theta$ that minimize a cost function can be determined. For example, the following cost function can be used:

$$Cost = D(I, f_{\boldsymbol{\theta}}) + \lambda R(\theta), \qquad (2)$$

where, D can be any differentiable distortion metric, measuring the fidelity of the estimated pixel values $f_\theta \equiv f_\theta(x,y)$ relative to the ground truth, that is, the corresponding pixel values from the original image $I = I(x, y)$. And, where $R$ can be any differentiable rate function (or an entropy model), measuring the resulting bitrate of the encoded parameters (e.g., encoded by quantization and entropy coding). The optimization of the network parameters $\theta$ is performed by the minimization of the *Cost* function, that is, employing a multi-objective optimization process, namely, Pareto optimization. In such optimization, minimization of one term (e.g., $D(I,f_\theta)$) cannot be achieved without degrading the other term (e.g., $R(\theta)$). A trade-off parameter $\lambda$ can be set to determine the balance between $D$ and $R$.

The distortion metric $D$ can be any differentiable metric that measure the distance (or similarity) between the original image $I(x,y)$ and its estimated version $f_\theta(x,y)$, such as a mean squared error metric or a learned perceptual image patch similarity (LPIPS) metric. For example, a mean squared error metric can be expressed as:

$$D_{MSE} = \frac{1}{MN}\sum_{x\in M, y\in N}(I(x,y) - f_{\boldsymbol{\theta}}(x,y))^2, \qquad\qquad (3)$$

where, $M$ and $N$ are the width and height of the image $I$ that the INR network is trained to predict.

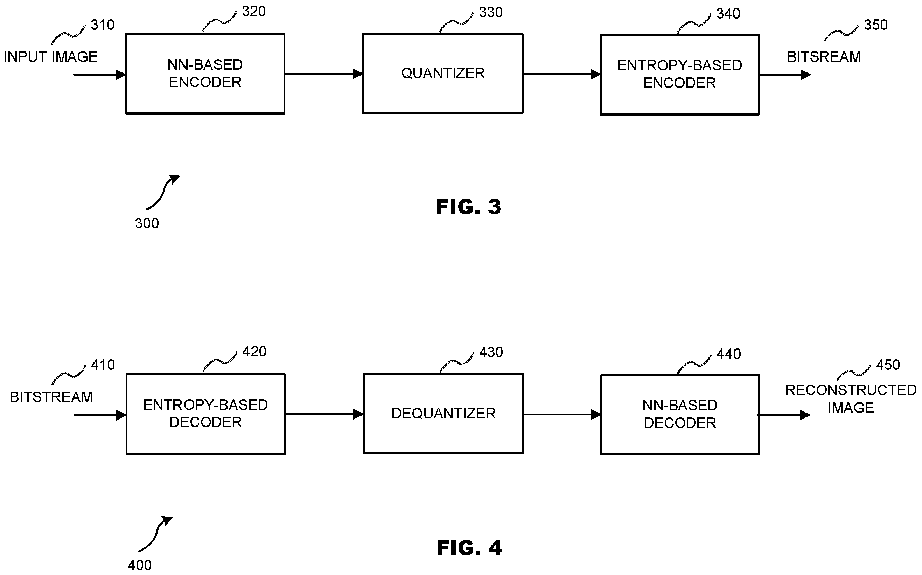

Thus, in a training phase of a neural network, optimal network parameters, denoted as $\theta^*$, are obtained via the optimization process. Then, in an inference phase of the neural network, the trained network is applied to predict a pixel value based on its corresponding coordinate values. Using neural networks for the application of encoding and decoding images is further described with respect to FIGS. 3 and 4. For clarity of the presentation, FIGS. 3 and 4 respectively illustrate the encoding and the decoding of two dimensional images; however, their respective components can be similarly applied to the encoding and the decoding of images of various dimensions (e.g., a volumetric data representing video content or 3D objects at a scene).

FIG. 3 is a block diagram of an example video encoder 300. The video encoder 300 can be employed by the system 100 described in reference to FIG. 1. In the example of FIG. 3, the video encoder 300 includes a neural network (NN) -based encoder 320, a quantizer 330, and an entropy-based encoder 340. The NN-based encoder 320 receives an input image 310 to be encoded. To code the input image 310, the NN-based encoder 320 trains a neural network (e.g., including an INR network 200 and/or a hybrid network as described herein) to generate network parameters representative of the input image 310. Specifically, based on the input image 310, the NN-based encoder 320 optimizes a cost function (e.g., equation (2) or (8)) to determine the optimal parameters of the neural network. For example, for an input image 310 with dimensions $M$ and $N$, $M$ times $N$ pairs of pixel coordinates $(x,y)$ and corresponding pixel values $I(x, y)$ can be used to train the neural network, that is, to determine the optimal network parameters that minimize the cost function. The determined network parameters, generated by the NN-based encoder 320, are then quantized by the quantizer 330. Following quantization, the quantized parameters are entropy-coded, by the entropy-based encoder 340, into a bitstream 350. That bitstream 350 can be used by a decoder to reconstruct the input image 310, as described in reference to FIG. 4.

FIG. 4 is a block diagram of an example video decoder 400. The video decoder 400 can be employed by the system 100 described in reference to FIG. 1. The decoder 400 generally reverses the operation of the encoder 300 of FIG. 3. In the example of FIG. 4, the video decoder 400 includes an entropy-based decoder 420, a dequantizer 430, and an NN-based decoder 440. As illustrated, the decoder 400 receives the bitstream 410 (that is, the bitstream 350 generated by the encoder 300) and entropy-decodes therefrom the quantized network parameters. The dequantizer 430 is then employed to dequantize these quantized network parameters, resulting in a restored version of the network parameters to be provided to the NN-based decoder 440.

The NN-based decoder 440 applies the neural network, defined by the restored network parameters, to generate the reconstructed image 450. Accordingly, the NN-based decoder 440 uses the network (trained by the NN-based encoder 320) to predict the value of any pixel of the input image 310. Thus, the decoder 400 can be applied to: 1) reconstruct the whole encoded image 310; 2) to reconstruct only a region of the encoded image; or 3) to progressively reconstruct the encoded image. For example, at the encoder 300, the network may be trained to predict pixel values of an image with dimensions M=256 by N=256 based on the corresponding coordinates. At the decoder 400, pixel values of the image can be predicted by evaluating the trained network using: 1) the full coordinate set used for training, including all pairs of $x \in$ 0,1, ...,255 and $y \in$ 0,1, ... ,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

As mentioned above, the minimization of the cost function (e.g., as expressed by equation (2) or (8)) involves a multi-objective optimization (Pareto optimization) process, where the minimization of one term cannot be achieved without degrading the other term(s). And so, decreasing the distortion error - and, therefore, increasing the reconstruction quality - results in increasing of the bitrate of the network parameters, which is a limiting outcome when the neural network is applied to compression. Techniques are disclosed herein to increase the quality of reconstructed images without significantly impacting the respective bitrate.

This can be achieved, according to aspects, by adjusting (shifting) the decoded network parameters according to the gradients of the distortion metric, using the shifted parameters for reconstruction. However, the gradients of the distortion metric are not available during decoding time. To overcome this, a Pareto optimal condition is exploited herein, in which a gradient of the distortion metric and a gradient of the rate function with respect to a network parameter are negatively correlated. Thus, at decoding time, gradients of the rate function (which are available during decoding time) are used as a proxy for respective gradients of the distortion metric. According to aspects, the optimized parameters of the trained neural network are adjusted at decoding time, so that the reconstruction quality of the predicted signal is improved. This can be achieved at the low cost of additionally coding a step size used for parameter shifting and, possibly, coding information identifying related modes of operation, as further described below.

Denoting by $\theta^*$ the network parameters that minimize the cost function in equation (2) (i.e., the optimized network parameters): $D(I, f_{\theta^*})$ represents the distortion resulted by evaluating the neural network based on these optimized network

parameters, and $R(\theta^*)$ represents the bitrate resulted by coding these optimized network parameters into the bitstream. At this optimal point, when $\theta = \theta^*$, according to the Pareto optimal condition, the gradients of the two terms, $D(I, f_{\theta^*})$ and $R(\theta^*)$, are opposite to each other, and, therefore, cancel each other out, resulting in the following condition:

$$\frac{\partial D\left(I, f_{\theta^*}\right)}{\partial\theta} = -\lambda\frac{\partial R(\theta^*)}{\partial\theta}. \tag{4}$$

This implies that for a network parameter $\theta_i$, when $\theta_i = \theta_i^*$, the gradient of the distortion metric $D$ with respect to $\theta_i$ has an opposite direction relative to the gradient of the rate function $R$ with respect to $\theta_i$. Therefore, gradient $R$ is a proxy of gradient $D$; and so, the former can be used in lieu of the latter.

Hence, according to aspects, the distortion metric can be further decreased (thus improving the reconstruction quality) in the decoder by shifting the network parameters in the direction which further decreases the distortion metric. That is

$$D(I, f_{\theta^*}) \geq D\left(I, f_{(\theta^* + \delta_D)}\right), \tag{5}$$

where $\delta_D = \frac{\partial D(I, f_{\theta^*})}{\partial\theta}$. However, the gradient $\frac{\partial D(I, f_{\theta^*})}{\partial\theta}$ cannot be computed during decoding time since $I$ is not available at the decoder end. Yet, as shown by equation (4), $\frac{\partial D(I, f_{\theta^*})}{\partial\theta}$ is negatively related to $\frac{\partial R(\theta^*)}{\partial\theta}$ which is available at decoding time, and, thus, can be used as a proxy:

$$\delta_D = \rho_\theta^* \delta_{R_\theta}, \tag{6}$$

where $\delta_{R_\theta} = \frac{\partial R(\theta^*)}{\partial\theta}$ is the gradient of the rate function with respect to $\theta$; and where $\rho_\theta^*$ denotes a step size. An optimal step size can be determined during encoding by optimizing the following function,

$$\rho_\theta^* = \arg\min_{\rho_\theta} D\left(I, f_{\theta^* + \rho_\theta \delta_{R_\theta}}\right). \tag{7}$$

The optimization can be carried out, for example, through gradient descent-based methods or through grid search method.

Hence, according to aspects, the NN-based encoder 320, following the training of the neural network, can be configured to determine the optimal step size, $\rho_\theta^*$ (e.g., according to equation (7)). The determined step size $\rho_\theta^*$ can then be encoded into the bitstream 350 (e.g., using fixed bit-length coding). At the decoder end, the step size can be extracted from the bitstream 410, decoded (e.g., using fixed bit-length decoding), and then be used to shift the network

$$\bar{\theta} = \theta^* + \rho_\theta^* \delta_{R_\theta}$$

parameters into:                     .

In an aspect, the parameters of the neural network can be grouped, for example, according to one or more of the layers they belong to and/or according to their types (e.g., weight parameters $p_1$-$p_L$, bias parameters $p_0$, or activation function parameters), and a step size can be determined with respect to each group of parameters and be used to shift the respective group of parameters as described herein. In this aspect, information regarding such a mode of operation needs to be indicated to the decoder, typically, by syntax elements coded into the bitstream. For example, information identifying each group of parameters and the associated step size should be signaled in the bitstream 350.

In an aspect, a hybrid network can be used. For example, a hybrid network can include a latent network that feeds the neural network shown in FIG. 2. In such a case, the coordinates 210 are first mapped by the latent network, resulting in the latent parameters $z$. These latent parameters $z$ can be optimized together with the network parameters $\theta$, using the following cost function:

$$Cost = D\big(I, f_{\theta,z}\big) + \lambda_\theta R_\theta(\theta) + \lambda_z R_z(z) \tag{8}$$

$$D_{MSE} = \frac{1}{MN} \sum_{x\in M, y\in N}\big(I(x,y) - f_{\theta,z}(x,y)\big)^2 , \tag{9}$$

where, $D$ is a distortion metric, measuring the fidelity of the estimated pixel values $f_{\theta,z} = f_{\theta,z}(x, y)$ relative to the ground truth, that is, the corresponding pixel values from the original image $I = I(x, y)$; where $R_\theta$ can be any differentiable rate function measuring the resulting bitrate of the encoded parameters $\theta$; and where $R_z$ can be any differentiable rate function measuring the resulting bitrate of the encoded latent parameters $z$. A balancing parameters $\lambda_\theta$ and A, can be set to balance among $D$, $R_\theta$, and $R_z$. The distortion metric $D$ can be any metric that measure the distance (or similarity) between the original image $I(x, y)$ and its estimated version $f_{\theta,z}(x, y)$, such as the mean squared error metric of equation (9). The optimization of the parameters $\theta$ and $z$ according to equation (8), is performed by employing a multi-objective optimization process (Pareto optimization). Then, the optimized parameters, denoted as $\theta^*$ and $z^*$, are encoded into the bitstream 350.

Hence, according to aspects, the optimized latent parameters can be shifted, $\bar{z} = z^* + \rho_z^* \delta_{R_z}$ , where $\delta_{R_z} = \frac{\partial R_z(Z)}{\partial Z}$ is the gradient of the rate function $R_z$ with respect to the latent parameters, and the optimal step size, $\rho_z^*$ , can be determined by optimizing the function:

$$\rho_Z^* = \arg\min_{\rho_Z} D\left(I, f_{\theta^*,(z^*+\rho_z\delta_{R_z})}\right) \tag{10}$$

Then, the optimized parameters $\theta^*$ can be shifted, $\bar{\theta} = \theta^* + \rho_\theta^* \delta_{R_\theta}$ , using the optimal step size $\rho_\theta^*$ , that can be determined by optimizing the function:

$$\rho_\theta^* = \arg\min_{\rho_\theta} D\left(I, f_{(\theta^*+\rho_\theta\delta_{R_\theta}),\bar{z}}\right) \tag{11}$$

In another example, the hybrid network can include a predefined function, denoted as $\mathcal{F}$ , that maps pixel coordinates 210 into features, $\beta = \mathcal{F}(x, y)$. These features are then fed into the neural network 200. In such hybrid network, $f_{\theta,\beta} \equiv f_{\theta,\beta}(\mathcal{F}(x, y))$, the predetermined function $\mathcal{F}(x, y)$ is employed to generate the features $\beta$ during the training (e.g., by the NN-based encoder 320) and during the evaluation (e.g., by the NN-based decoder 440) of the network. In an aspect, the predetermined function can be a Fourier mapper. In this case, the input coordinates 210 are mapped through Random Fourier mapping (or its variants), generating Fourier features that encode the high frequency content of the image. These features are then fed into the neural network (as described in EP Patent Application 23306179.5 and EP Patent application 23307413.7).

Like the network parameters $\theta^*$, the features $\beta$ can be shifted by a respective step size, denoted as $\rho_\beta$. However, since the features $\beta$ are not encoded into the bitstream (but similarly generated in the encoder and the decoder ends), in an aspect, the gradient used to derive the optimal step size, $\rho_\beta^*$ , can be computed as follows:

$$\delta_\beta = \frac{\partial R(\theta^*)}{\partial \beta} = \frac{\partial R(\theta^*)}{\partial \theta}\mathbb{J} \tag{12}$$

where $\mathbb{J}$ denotes the Jacobian matrix, that is, $\mathbb{J}_{i,j} = \frac{\partial\theta_j}{\partial\beta_i}$ (partial derivation of the network parameter with respect to the features). The Jacobian matrix can be generated, for example, with automatic differentiation tools, such as PyTorch, TensorFlow, and the like.

Hence, according to aspects, the features $\beta$ can be shifted, $\bar{\beta} = \beta + \rho_\beta^* \, \delta_\beta$, and the optimal step size, $\rho_\beta^*$, can be determined by optimizing the function:

$$\rho_\beta^* = \arg\min_{\rho_\beta} D\left(I, f_{\theta^*,(\beta+\rho_\beta\delta_\beta)}\right) \qquad (13)$$

Then, the optimized parameters $\theta^*$ can be shifted, $\bar{\theta} = \theta^* + \rho_\theta^* \, \delta_{R_\theta}$, using the optimal step size $\rho_\theta^*$, that can be determined by optimizing the function:

$$\rho_\theta^* = \arg\min_{\rho_\theta} D\left(I, f_{(\theta^*+\rho_\theta\delta_{R_\theta}),\bar{\beta}}\right) \qquad (14)$$

The determined step sizes, $\rho_\beta^*$ and $\rho_\theta^*$, are encoded into the bitstream 350.

The encoding and decoding processes, according to aspects, are further described below in reference to FIGS. 3-4.

According to aspects, the encoder 300 may be configured to code an input image 310 into a bitstream 350. The following steps may be carried out by the encoder 300.

- **Step C1:** The optimized network parameters $\theta^*$ are determined (e.g., by the NN-based encoder 320) as described with respect to equations (2)-(3). The determined parameters $\theta^*$ are then encoded (e.g., quantized 330 and entropy-coded 340) into the bitstream 350.

- **Step C2:** The step size $\rho_\theta^*$ is determined (e.g., by the NN-based encoder 320) as described with respect to equations (4)-(7). The determined step size, $\rho_\theta^*$, is then encoded in the bitstream 350 (e.g., using fixed bitlength coding).

   ◦ If one or more groups of network parameters are to be shifted differently, then a step size is determined with respect to the parameters of each group. Information indicating this mode of operation should be signaled into the bitstream 350.

If a hybrid network is used, the following steps may be carried out by the encoder 300.

- **Step C1:** The optimized parameters $\theta^*$ of the INR network and $z^*$ of the latent network are determined (e.g., by the NN-based encoder 320) as described with respect to equations (8)-(9). The determined parameters $\theta^*$ and $z^*$ are then encoded (e.g., quantized 330 and entropy-coded 340) into the bitstream 350.

- **Step C2:** The step size $\rho_z^*$ is determined (e.g., by the NN-based encoder 320) as described with respect to equation (10). The determined step size, $\rho_z^*$, is then encoded into the bitstream 350 (e.g., using fixed bitlength coding).

   ◦ If one or more groups of latent network parameters are to be shifted differently, then a step size is determined with respect to the parameters of each group. Information indicating this mode of operation should be signaled into the bitstream 350.

- **Step C3:** The step size $\rho_\theta^*$ is determined (e.g., by the NN-based encoder 320) as described with respect to equation

$$\rho_\theta^*$$

(11). The determined step size, $\rho_\theta^*$, is then encoded in the bitstream 350 (e.g., using fixed bitlength coding).

◦ If one or more groups of INR network parameters are to be shifted differently, then a step size is determined with respect to the parameters of each group. Information indicating this mode of operation should be signaled into the bitstream.

According to aspects, the decoder 400 is configured to decode the bitstream 410 (that is, the bitstream 350 generated by the encoder 300) to generate a reconstructed image 450. The following steps may be carried out by the decoder 400.

- **Step D1:** The parameters $\theta^*$ of the INR network are decoded (e.g., entropy-decoded 420 and dequantized 430) from the bitstream 410.

- **Step D2:** The gradients $\delta_{R_\theta}$ are computed based on the decoded parameters $\theta^*$.

- **Step D3:** The step size $\rho_\theta^*$ is decoded from the bitstream 410, and the decoded parameters $\theta^*$ are then shifted into

$$\bar{\theta} = \theta^* + \rho_\theta^* \delta_{R_\theta}.$$

◦ If other information decoded from the bitstream indicates that one or more groups of network parameters are to be shifted differently, then a step size is decoded from the bitstream with respect to the parameters of each group, and the parameters of each group are then shifted using the respective step size.

- **Step D4:** The INR network is evaluated based on the shifted parameters.

In the case when a hybrid network is used, the following steps may be carried out by the decoder 400.

- **Step D1:** The parameters $\theta^*$ of the INR network and the parameters $z^*$ of the latent network are decoded (e.g., entropy-decoded 420 and dequantized 430) from the bitstream 410.

- **Step D2:** The gradients $\delta_{R_\theta}$ are computed based on the decoded parameters $\theta^*$, and the gradients $\delta_{R_z}$ are computed based on the decoded parameters $z^*$.

- **Step D3:** The step size $\rho_\theta^*$ and the step size $\rho_z^*$ are decoded from the bitstream 410. Then, the decoded parameters $\theta^*$ are shifted into $\bar{\theta} = \theta^* + \rho_\theta^* \delta_{R_\theta}$, and the decoded latent parameters $z^*$ are shifted into

$$\bar{z} = z^* + \rho_z^* \delta_{R_z},$$

o If other information decoded from the bitstream indicates that one or more groups of INR network parameters and/or latent network parameters are to be shifted differently, then a step size is decoded from the bitstream with respect to the parameters of each group, and the parameters of each group are shifted using the respective step size.

- **Step D4:** The hybrid network is evaluated based on the shifted parameters $\bar{\theta}$ and $\bar{z}$.

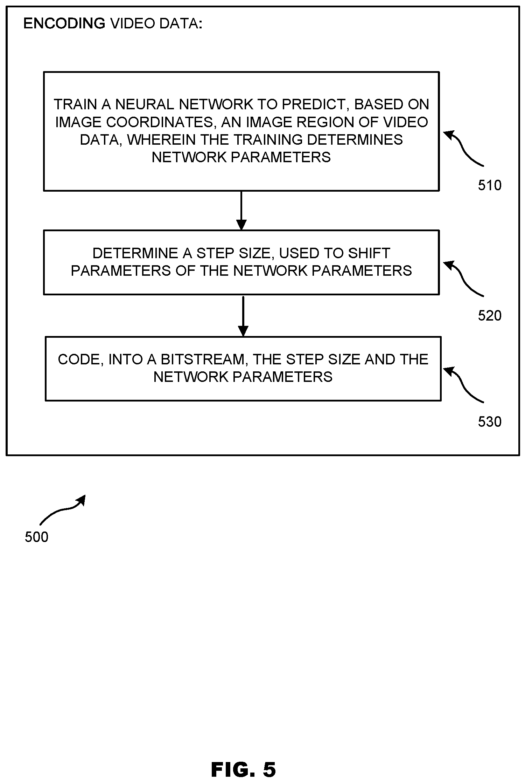

FIG. 5 is a flowchart of an example method for encoding video data 500, according to which aspects of the present embodiments can be implemented. The method 500 may be performed by the encoder 300 described in reference to FIG. 3. The method 500 begins, in step 510, with the training of a neural network to predict an image region of the video data based on image coordinates. The training determines network parameters, $\theta^*$, by minimizing a cost function (e.g. the cost function of equation (2)). In step 520, a step size $\rho_\theta^*$ is determined. Then, in step 530, both the step size and the network parameters are coded into a bitstream 350. As described herein, to improve the quality of reconstruction, the step size can be used by a decoder 400 to shift parameters of the network parameters, and the shifted parameters are then used in reconstructing the image region. According to aspects, determining the step size, $\rho_\theta^*$, may be performed by computing gradients, $\delta_{R_\theta}$, of a rate function, $R_\theta$, measuring bitrate resulted by the coding of the parameters to be shifted, and then determining the step size, $\rho_\theta^*$, so that shifting parameters of the network parameters, based on the step size, $\rho_\theta^*$, and based on the gradients, $\delta_{R_\theta}$, minimizes a distortion metric, $D$, measuring a fidelity of the predicted image region (e.g., see equation (7)).

In an aspect, a hybrid network may be used where in addition to the neural network 200 a latent network is used. In this case, the method 500 further includes training a latent network, where the training further determines latent network parameters, $z^*$; determining another step size, $\rho_Z^*$, used to shift parameters of the latent network parameters; and coding, into the bitstream, the step size, $\rho_Z^*$, and the latent network parameters, $z^*$. According to aspects, determining the step size, $\rho_Z^*$, may be performed by computing gradients, $\delta_{R_z}$, of a rate function, $R_z$, measuring bitrate resulted by the coding of the latent network parameters to be shifted, and then determining the step size, $\rho_Z^*$, so that shifting parameters of the latent network parameters, based on this step size, $\rho_Z^*$, and based on the gradients, $\delta_{R_z}$, minimizes a distortion metric $D$ measuring a fidelity of the predicted image region. (e.g., see equation (10)). In another aspect, the hybrid network can include a predefined function, as described in reference to equations (12)-(13). In this case, the method 500 can further include determining a step size, $\rho_\beta^*$, used to shift the features (e.g., see equation 13) and coding the determined step size into the bitstream.

In another aspect, one or more syntax elements can be coded into the bitstream to identify the parameters, of the network parameters, to be shifted by the step size $\rho_\theta^*$. The identified parameters may belong to one or more layers of the neural network 200. Or, the identified parameters may include weight parameters, bias parameters, activation function parameters, or a combination thereof. Similarly, one or more syntax elements can be coded into the bitstream to identify the parameters, of the latent network parameters, to be shifted by the other step size $\rho_Z^*$. The identified parameters may belong to one or more layers of the latent network. Or, the identified parameters may include weight parameters, bias parameters, activation function parameters, or a combination thereof.

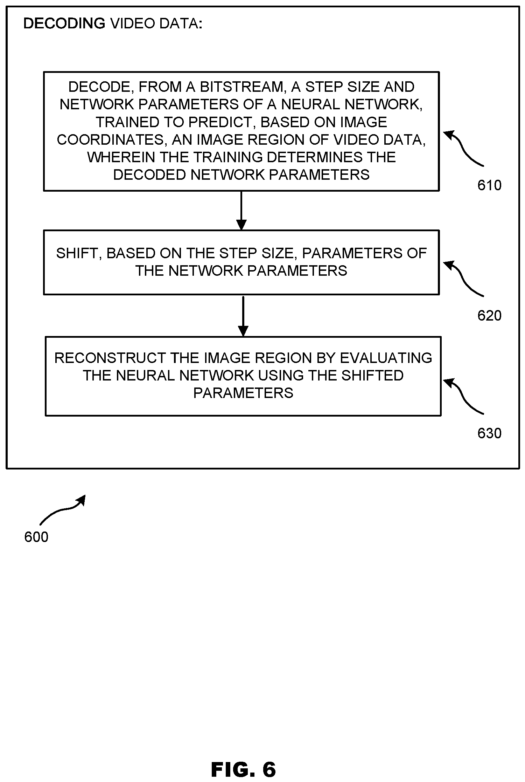

FIG. 6 is a flowchart of an example method for decoding video data 600, according to which aspects of the present embodiments can be implemented. The method 600 may be performed by the decoder 400 described in reference to FIG. 4. The method 600 begins, in step 610, with the decoding, from a bitstream 410, a step size, $\rho_\theta^*$, and network parameters, $\theta^*$, of a neural network. The neural network is trained to predict, based on image coordinates, an image region of the video data. That training, performed by the encoder 300, determined the decoded network parameters by minimizing a cost function (e.g. the cost function of equation (2)). In step 620, parameters of the network parameters are shifted based on the step size. Then, in step 630, the image region is reconstructed by evaluating the neural network using the shifted parameters. According to aspects, the shifting of the parameters may be performed by computing gradients, $\delta_{R_\theta}$, of a rate function, $R_\theta$, measuring bitrate of the decoded network parameters to be shifted; and then adjusting these parameters based on the step size, $\rho_\theta^*$, and based on the gradients, $\delta_{R_\theta}$ (e.g., $\bar\theta = \theta^* + \rho_\theta^* \delta_{R_\theta}$).

When a hybrid network is applied, a latent network can be used in addition to the neural network 200. In this case, the method 600 further includes decoding, from the bitstream, another step size, $\rho_z^*$, and latent network parameters, $z^*$, of the latent network; shifting parameters of the latent network parameters based on the step size $\rho_z^*$; and reconstructing the image region by evaluating the latent network using the shifted parameters. According to aspects, shifting the parameters of the latent network parameters may be performed by computing gradients, $\delta_{R_z}$, of a rate function, $R_z$, measuring bitrate of the decoded latent network parameters to be shifted, and then adjusting these parameters based on the step size $\rho_z^*$ and based on the gradients $\delta_{R_z}$ (e.g., $\bar{z} = z^* + \rho_z^* \delta_{R_z}$). When a hybrid network includes a predefined function, as described in reference to equations (12)-(13), the method 600 can further include shifting, based on a step size decoded from the bitstream, $\rho_\beta^*$, features generated by the predetermined function (e.g., see equation 13).

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method for encoding video data, comprising:

   training a neural network to predict, based on image coordinates, an image region of the video data, wherein the training determines network parameters;
   determining a step size, used to shift parameters of the network parameters; and
   coding, into a bitstream, the step size and the network parameters.

2. An apparatus for encoding video data, comprising:

   at least one processor; and
   memory storing instructions that, when executed by the at least one processor, cause the apparatus to:

   train a neural network to predict, based on image coordinates, an image region of the video data, wherein the training determines network parameters,
   determine a step size, used to shift parameters of the network parameters, and
   code, into a bitstream, the step size and the network parameters.

3. The method according to claim 1 or the apparatus according to claim 2,
   wherein the determining of the step size comprises:

   computing gradients of a rate function measuring bitrate resulted by the coding of the parameters of the network parameters; and
   determining the step size so that shifting the parameters of the network parameters, based on the step size and based on the gradients of the rate function, minimizes a distortion metric measuring a fidelity of the predicted image region.

4. The method according to claim 1 or 3 or the apparatus according to claim 2 or 3:

wherein the training further comprises training a latent network, wherein the training further determines latent network parameters,

wherein the determining of the step size further comprises determining another step size, used to shift parameters of the latent network parameters, and

wherein the coding further comprises coding, into the bitstream, the other step size and the latent network parameters.

5. The method according to claim 1 or 3 or the apparatus according to claim 2 or 3:

wherein the determining of the step size further comprises determining another step size, used to shift features generated, based on the image coordinates, by a predetermined function, wherein the training of the neural network is based on the features, and

wherein the coding further comprises coding, into the bitstream, the other step size.

6. The method according to any one of claims 1 and 3-5 further comprising or the apparatus according to any one of claims 2-5 wherein the instructions further cause the apparatus to perform:

coding, into the bitstream, one or more syntax elements identifying the parameters of the network parameters to be shifted by the step size.

7. The method according to claims 6 or the apparatus according claim 6, wherein:

the identified parameters belong to one or more layers of the neural network.

8. The method according to claims 6 or the apparatus according claim 6, wherein:

the identified parameters include weight parameters, bias parameters, activation function parameters, or a combination thereof.

9. A method for decoding video data, comprising:

decoding, from a bitstream, a step size and network parameters of a neural network, the neural network is trained to predict, based on image coordinates, an image region of the video data, wherein the training determines the decoded network parameters;

shifting, based on the step size, parameters of the network parameters; and

reconstructing the image region by evaluating the neural network using the shifted parameters.

10. An apparatus for decoding video data, comprising:

at least one processor; and

memory storing instructions that, when executed by the at least one processor, cause the apparatus to:

decode, from a bitstream, a step size and network parameters of a neural network, the neural network is trained to predict, based on image coordinates, an image region of the video data, wherein the training determines the decoded network parameters,

shift, based on the step size, parameters of the network parameters, and

reconstruct the image region by evaluating the neural network using the shifted parameters.

11. The method according to claim 9 or the apparatus according to claim 10,

wherein the shifting of the parameters of the network parameters comprises:

computing gradients of a rate function measuring bitrate of the decoded parameters of the network parameters; and

adjusting the parameters of the network parameters based on the step size and based on the gradients of the rate function.

12. The method according to claim 9 or 11 or the apparatus according to claim 10 or 11:

wherein the decoding further comprises decoding, from the bitstream, another step size and latent network parameters of a latent network,

wherein the shifting further comprises shifting, based on the other step size, parameters of the latent network parameters, and
wherein the reconstructing further comprises reconstructing the image region by evaluating the latent network using the shifted parameters.

13. The method according to claim 9 or 11 or the apparatus according to claim 10 or 11:

wherein the decoding further comprises decoding, from the bitstream, another step size, and
wherein the shifting further comprises shifting, based on the other step size, features generated, based on the image coordinates, by a predetermined function, wherein the training of the neural network is based on the features.

14. The method according to claim 12 or 13 further comprising or the apparatus according to claim 12 or 13 wherein the instructions further cause the apparatus to perform:
decoding, from the bitstream, one or more syntax elements identifying the parameters of the latent network parameters to be shifted by the other step size.

15. The method according to any one of claims 9 and 11-14 further comprising or the apparatus according to any one of claims 10-14 wherein the instructions further cause the apparatus to perform:
decoding, from the bitstream, one or more syntax elements identifying the parameters of the network parameters to be shifted by the step size.

**FIG. 1**

EP 4 651 481 A1

FIG. 2

INPUT IMAGE → 310

320 → NN-BASED ENCODER

330 → QUANTIZER

340 → ENTROPY-BASED ENCODER

→ BITSREAM 350

**FIG. 3**

300

BITSTREAM → 410

420 → ENTROPY-BASED DECODER

430 → DEQUANTIZER

440 → NN-BASED DECODER

→ RECONSTRUCTED IMAGE 450

**FIG. 4**

400

ENCODING VIDEO DATA:

TRAIN A NEURAL NETWORK TO PREDICT, BASED ON IMAGE COORDINATES, AN IMAGE REGION OF VIDEO DATA, WHEREIN THE TRAINING DETERMINES NETWORK PARAMETERS

510

DETERMINE A STEP SIZE, USED TO SHIFT PARAMETERS OF THE NETWORK PARAMETERS

520

CODE, INTO A BITSTREAM, THE STEP SIZE AND THE NETWORK PARAMETERS

530

500

**FIG. 5**

DECODING VIDEO DATA:

DECODE, FROM A BITSTREAM, A STEP SIZE AND NETWORK PARAMETERS OF A NEURAL NETWORK, TRAINED TO PREDICT, BASED ON IMAGE COORDINATES, AN IMAGE REGION OF VIDEO DATA, WHEREIN THE TRAINING DETERMINES THE DECODED NETWORK PARAMETERS

610

SHIFT, BASED ON THE STEP SIZE, PARAMETERS OF THE NETWORK PARAMETERS

620

RECONSTRUCT THE IMAGE REGION BY EVALUATING THE NEURAL NETWORK USING THE SHIFTED PARAMETERS

630

600

**FIG. 6**

Europäisches
Patentamt
European
Patent Office
Office européen
des brevets

**EUROPEAN SEARCH REPORT**

Application Number

EP 24 30 5742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/385907 A1 (ZHANG YUNFAN [NL] ET AL) 1 December 2022 (2022-12-01) * paragraphs [0052], [0053], [0112], [0166] - [0177], [0185]; figure 7A * ----- | 1-15 | INV. H04N19/117 H04N19/147 H04N19/172 |
| A | YANNICK STR\"UMPLER ET AL: "Implicit Neural Representations for Image Compression", ARXIV.ORG, CORNELL UNIVERSITY LIBRARY, 201 OLIN LIBRARY CORNELL UNIVERSITY ITHACA, NY 14853, 8 December 2021 (2021-12-08), XP091115347, * sections 3.2, 3.3 * ----- | 1-15 | |
| A | ZONGYU GUO ET AL: "Compression with Bayesian Implicit Neural Representations", ARXIV.ORG, CORNELL UNIVERSITY LIBRARY, 201 OLIN LIBRARY CORNELL UNIVERSITY ITHACA, NY 14853, 30 May 2023 (2023-05-30), XP091524504, * sections 1, 3 * ----- | 1-15 | |
| A | HUO ZHIYONG ET AL: "Implicit Neural Representation with Learnable Fourier Feature Encoding for View Synthesis", 2023 16TH INTERNATIONAL CONGRESS ON IMAGE AND SIGNAL PROCESSING, BIOMEDICAL ENGINEERING AND INFORMATICS (CISP-BMEI), IEEE, 28 October 2023 (2023-10-28), pages 1-5, XP034499782, DOI: 10.1109/CISP-BMEI60920.2023.10373386 [retrieved on 2024-01-02] * section II * ----- | 1-15 | TECHNICAL FIELDS SEARCHED (IPC) H04N |

The present search report has been drawn up for all claims

| Place of search | Date of completion of the search | Examiner |
|---|---|---|
| Munich | 26 September 2024 | Montoneri, Fabio |

EPO FORM 1503 03.82 (P04C01)

**EP 4 651 481 A1**

## ANNEX TO THE EUROPEAN SEARCH REPORT
## ON EUROPEAN PATENT APPLICATION NO.

EP 24 30 5742

26-09-2024

| Patent document cited in search report | Publication date | Patent family member(s) | Publication date |
|---|---|---|---|
| US 2022385907 A1 | 01-12-2022 | BR 112023023427 A2 | 30-01-2024 |
| | | EP 4342178 A1 | 27-03-2024 |
| | | JP 2024519791 A | 21-05-2024 |
| | | KR 20240012374 A | 29-01-2024 |
| | | TW 202247650 A | 01-12-2022 |
| | | US 2022385907 A1 | 01-12-2022 |
| | | WO 2022245434 A1 | 24-11-2022 |

EPO FORM P0459

For more details about this annex : see Official Journal of the European Patent Office, No. 12/82

**EP 4 651 481 A1**

**REFERENCES CITED IN THE DESCRIPTION**

**Patent documents cited in the description**

- EP 23306179

- EP 23307413